# EUROPEAN PATENT APPLICATION

(11) **EP 1 962 361 A1**
(43) Date of publication of application: **27.08.2008**
(21) Application number: 06833724.5
(22) Date of filing: 30.11.2006
(51) Int. Cl.: H01M 8/06, H01M 8/04, H01M 8/10

(54) **METHOD FOR PRODUCTION OF SOLID FUEL FOR FUEL CELL, METHOD FOR CONTROL OF VAPORIZATION OF FUEL FOR FUEL CELL, SOLID FUEL FOR FUEL CELL, AND FUEL CELL**

(30) Priority: 01.12.2005 JP 2005348002; 19.01.2006 JP 2006011771
(71) Applicant: Kurita Water Industries Ltd., Shinjuku-ku, Tokyo 100-8383 (JP)
(72) Inventor: MORI,Koichi, Tokyo; 160-8383 (JP)
(74) Representative: Nicholls, Michael John
(86) International application number: PCT/JP2006/323921
(87) International publication number: WO 2007/063936

(57) **Abstract**

A solid fuel for fuel cells is produced by introducing a fuel for fuel cells into a porous material, molding an obtained fuel-carrying material to a predetermined shape and forming a coating film on the surface of an obtained molded fuel-carrying material. Further, a solid fuel for fuel cells is produced by introducing water and a fuel for fuel cells into a porous material, molding an obtained fuel-carrying material to a predetermined shape and forming a coating film on the surface of an obtained molded fuel-carrying material. A solid fuel for fuel cells excellent in handleability can be produced thereby, while the safety of the fuel for fuel cells is improved by controlling the vaporization of the fuel for fuel cells.

## Description

### TECHNICAL FIELD

The present invention relates to a method for producing a solid fuel for fuel cells, a method for controlling vaporization of a fuel for fuel cells, a solid fuel for fuel cells, and a fuel cell.

### BACKGROUND ART

Measures for tackling environmental and resource issues have gained in importance in recent years. Among such measures, the development of fuel cells, which allow generating electric power through direct feeding of water and an organic solvent as a liquid fuel, is being actively pursued. Direct methanol fuel cells, which can generate electric power using methanol as a liquid fuel by feeding methanol directly, without reforming or gasifying it, have in particular a simple structure that can be easily miniaturized and made lightweight. Direct methanol fuel cells, therefore, hold promise as portable power supplies, as a form of distributed power and as consumer power supplies in, for instance, small portable electronic devices, computers and the like.

Such fuel cells that generate electric power through direct feeding of a liquid fuel comprise a stack of plural cells having each a membrane-electrode assembly (MEA) in which a positive electrode (air electrode) and a negative electrode (fuel electrode), on two sides, are bonded via an interposed electrolyte that comprises a solid polymer electrolyte membrane having proton conductivity, the MEA being supported by a separator on the positive electrode side (air electrode side) and a separator on the negative electrode side (fuel electrode side). The separator on the positive electrode side (air electrode side) and the separator on the negative electrode side (fuel electrode side) have the function of feeding an oxidizing gas to the positive electrode (air electrode) and a liquid fuel to the negative electrode (fuel electrode), and of discharging the reaction products that form as a result of the electrochemical reactions that take place between the oxidizing gas and the liquid fuel via the electrolyte.

In a direct methanol fuel cell, thus, a methanol aqueous solution is fed to the negative electrode (fuel electrode) and air, as an oxidizing gas, is fed to the positive electrode (air electrode). Thereupon, methanol and water react at the negative electrode (fuel electrode), generating carbon dioxide and releasing hydrogen ions and electrons, while at the positive electrode (air electrode), air oxygen in the air takes up the electrons and hydrogen ions that pass through the electrolyte, to form water and generate an electromotive force in an external circuit. The generated water is discharged out of the positive electrode (air electrode) side together with air not participating in the reaction, while carbon dioxide and methanol aqueous solution not participating in the reaction are discharged out of the negative electrode (fuel electrode) side.

Fuel feeding systems that have been proposed in such direct methanol fuel cells include external injection systems, in which undiluted methanol or a methanol aqueous solution are directly injected into the negative electrode (fuel electrode) from outside the cell, via a syringe-like injector, or cartridge systems, in which a cartridge filled with undiluted methanol or a methanol aqueous solution is removably connected to the negative electrode (fuel electrode) of the fuel cell, and the undiluted methanol or the methanol aqueous solution is fed from the cartridge directly to the negative electrode (fuel electrode), so that, when a drop in the output of the fuel cell is observed, the cartridge is replaced by a new one. In both injection and cartridge systems, however, the methanol fuel is held in a liquid state, and hence both are problematic in terms of handleability, on account of risks such as fuel splashing, leaking and the like during fuel feeding.

From the viewpoint of enhancing the output characteristics of direct methanol fuel cells, methanol aqueous solutions having a higher concentration are preferable. Methanol, however, is highly volatile and vaporizes readily at atmospheric pressure. Vaporized methanol can easily ignite in the presence of an ignition source, and thus both the use and transport of methanol pose safety problems. For these reasons the amount and/or concentration of methanol carried in means of transport, for instance in aircraft, is subject to regulatory restrictions. The regulatory limitations on methanol in aircraft are an obstacle that hinders the commercial viability of direct methanol fuel cells. Although easing of such regulations is being advocated, there remain technical limits as regards reducing risks such as liquid leakage and so forth. Practical use of direct methanol fuel cells necessitates thus a highly safe fuel.

### DISCLOSURE OF THE INVENTION

### PROBLEM TO BE SOLVED BY THE INVENTION

An object of the present invention is to provide a method for producing a solid fuel for fuel cells having excellent handleability, to provide a solid fuel for fuel cells having excellent handleability, and to provide a fuel cell using such a solid fuel for fuel cells. Another object of the invention is to provide a method for improving the safety of fuel for fuel cells by controlling the vaporization of the fuel for fuel cells.

### MEANS FOR SOLVING THE PROBLEM

In order to solve the above problems, the method for producing a solid fuel for fuel cells of the present invention comprises the step of introducing a fuel for fuel cells into a porous material (Invention 1).

By bringing into contact a fuel for fuel cells and a porous material, thereby introducing the fuel for fuel cells into the porous material, the above invention (Invention 1) allows obtaining a solid fuel for fuel cells having excellent handleability.

In the present description, the term "porous material" denotes generically a material having holes, called pores, of an irregular-shaped surface, such that the depth of recessed portions is larger than the diameter of the pores, and such that liquid and gaseous substances can be introduced inside the pores.

Also, a method for producing a solid fuel for fuel cells of the present invention comprises the step of introducing water and a fuel for fuel cells into a porous material (Invention 2).

By introducing the fuel for fuel cells into the porous material, the above invention (Invention 2) allows-obtaining a solid fuel for fuel cells having excellent handleability. The component introduced into the porous material, moreover, is a two-component system of water and fuel for fuel cells, This results in a lower vapor pressure than is the case when the component introduced in the porous material is a one-component system comprising the fuel for fuel cells alone, and allows controlling vaporization of the fuel for fuel cells even under such temperature conditions where a fuel for fuel cells ordinarily vaporizes, thereby affording a solid fuel for fuel cells excellent in safety.

Also, a method for producing a solid fuel for fuel cells of the present invention comprises the steps of introducing a fuel for fuel cells into a porous material, and molding an obtained fuel-carrying material to a predetermined shape (Invention 3). Also, a method for producing a solid fuel for fuel cells of the present invention comprises the steps of introducing water and a fuel for fuel cells into a porous material, and molding an obtained fuel-carrying material to a predetermined shape (Invention 4). By carrying out molding to a predetermined shape, the above inventions (Inventions 3 and 4) allow obtaining a solid fuel for fuel cells having yet superior handleability.

In the above inventions (Inventions 3 and 4), preferably, the fuel-carrying material is a powder, and the powdery fuel-carrying material is molded using a binder (Invention 5). In the above invention (Invention 5) the fuel-carrying material is a powder, and can thus be molded easily.

In the above inventions (Inventions 3 to 5), preferably, the fuel-carrying material is molded to a spherical shape (Invention 6). By molding the fuel-carrying material to a spherical shape, the above invention (Invention 6) allows forming a homogeneous coating film on the surface of the fuel-carrying material, and allows the thickness of the formed coating film to be calculated on the basis of a quantitative relationship vis-A-vis a coating agent, affording thus a solid fuel for fuel cells excellent in terms of quality control.

Also, a method for producing a solid fuel for fuel cells of the present invention comprises the steps of introducing a fuel for fuel cells into a porous material, and forming a coating film on the surface of an obtained fuel-carrying material (Invention 7). Also, a method for producing a solid fuel for fuel cells comprises the step of introducing water and a fuel for fuel cells into a porous material, and forming a coating film on the surface of an obtained fuel-carrying material (Invention 8). By forming a coating film on the surface of the fuel-carrying material, the above inventions (Inventions 7 and 8) allow controlling the vaporization of the fuel for fuel cells introduced into the porous material, inside the coating film, even under temperature conditions at which the fuel for fuel cells vaporizes. A highly safe solid fuel for fuel cells can be produced as a result. In particular, the above invention (invention 8) allows producing a solid fuel for fuel cells having yet higher safety, since the component introduced into the porous material is a two-component system of water and fuel for fuel cells, and there is further formed a coating film on the surface of the fuel-carrying material.

In the above inventions (Inventions 3 to 6), preferably, a coating film is formed on the surface of a molded fuel-carrying material obtained by molding the fuel-carrying material (Invention 9). By forming a coating film on the surface of the molded fuel-carrying material, the above invention (Invention 9) allows controlling the vaporization of the fuel for fuel cells introduced into the porous material, inside the coating film, even under temperature conditions at which the fuel for fuel cells vaporizes. A highly safe solid fuel for fuel cells can be produced as a result.

In the above inventions (Inventions 7 to 9), preferably, the coating film is formed by a cellulose derivative and/or polyvinyl alcohol (Invention 10). Cellulose derivatives and polyvinyl alcohol have an excellent film formation effect, and hence allow easily forming a coating film on the surface of the fuel-carrying material or the molded fuel-carrying material. The above invention (Invention 10), therefore, allows further controlling the vaporization of the fuel for fuel cells introduced into the porous material, inside the coating film, even under temperature conditions at which the fuel for fuel cells vaporizes. A solid fuel for fuel cells having yet higher safety can be produced as a result.

In the above inventions (Inventions 1 to 10), preferably, the fuel for fuel cells is an alcohol (Invention 11). In the latter invention (Invention 11), preferably, the alcohol is methanol (Invention 12).

In the above inventions (Inventions 1 to 12), preferably, the porous material is magnesium aluminometasilicate (Invention 13). Magnesium aluminometasilicate, whose specific surface area is extremely large even among porous materials, has a high holding ability, and can hence introduce large amounts of solvents such as alcohol and water. There is thus virtually no change in appearance between magnesium aluminometasilicate having a solvent introduced into the pores thereof and the magnesium aluminometasilicate prior to introducing the solvent. The above invention (Invention 13), therefore, allows effectively introducing a fuel for fuel cells into a porous material, affording thereby a solid fuel for fuel cells having excellent handleability.

Also, a method for controlling vaporization of a fuel for fuel cells of the present invention comprises the step of introducing water and a fuel for fuel cells into a porous material (Invention 14). In the above invention (Invention 14), the fuel for fuel cells is introduced into the porous material as a two-component system of water and a fuel for fuel cells. This results in a lower vapor pressure than is the case when the component introduced in the porous material is a one-component system comprising the fuel for fuel cells alone, and allows controlling vaporization of the fuel for fuel cells even under such temperature conditions where a fuel for fuel cells ordinarily vaporizes.

Also, a method for controlling vaporization of a fuel for fuel cells of the present invention comprises the steps of introducing a fuel for fuel cells into a porous material, and forming a coating film on the surface of an obtained fuel-carrying material (Invention 15). Also, a method for controlling vaporization of a fuel for fuel cells of the present invention comprises the steps of introducing water and a fuel for fuel cells into a porous material, and forming a coating film on the surface of an obtained fuel-carrying material (Invention 16). Also, a method for controlling vaporization of a fuel for fuel cells of the present invention comprises the steps of introducing a fuel for fuel cells into a porous material, molding an obtained fuel-carrying material to a predetermined shape, and forming a coating film on the surface of an obtained molded fuel-carrying material (Invention 17). Also, a method for controlling vaporization of a fuel for fuel cells of the present invention comprises the steps of introducing water and a fuel for fuel cells into a porous material, molding an obtained fuel-carrying material to a predetermined shape, and forming a coating film on the surface of an obtained molded fuel-carrying material (Invention 18).

By forming a coating film on the surface of the fuel-carrying material or the molded fuel-carrying material, the above inventions (Inventions 15 to 18) allow further controlling the vaporization of the fuel for fuel cells introduced in the porous material, inside the coating film, even under temperature conditions at which the fuel for fuel cells vaporizes.

In the above inventions (Inventions 17 and 18), preferably, the fuel-carrying material is a powder, and the powdery fuel-carrying material is molded using a binder (Invention 19).

In the above inventions (Inventions 17 to 19), preferably, the fuel-carrying material is molded to a spherical shape (Invention 20). Through molding to a spherical shape, the above invention (Invention 20) allows forming a homogeneous coating film on the surface of the molded fuel-carrying material obtained by molding, and allows the thickness of the formed coating film to be calculated on the basis of a quantitative relationship between a coating agent and the molded fuel-carrying material, affording thus a solid fuel for fuel cells excellent in terms of quality control.

In the above inventions (Inventions 15 to 20), preferably, the coating film is formed by a cellulose derivative and/or polyvinyl alcohol (Invention 21). Cellulose derivatives and polyvinyl alcohol have excellent film formation effect, and hence allow easily forming a coating film on the surface of the fuel-carrying material or the molded fuel-carrying material. The above invention (Invention 21), therefore, allows further controlling the vaporization of the fuel for fuel cells introduced in the porous material, inside the coating film, even under temperature conditions at which the fuel for fuel cells vaporizes. A solid fuel for fuel cells having yet higher safety can be produced as a result.

A solid fuel for fuel cells of the present invention is obtained by introducing a fuel for fuel cells into a porous material (Invention 22). Such a solid fuel for fuel cells comprises a fuel for fuel cells introduced into a porous material, and is hence excellent in handleability, without occurrences such as liquid leakage or the like.

Also, a solid fuel for fuel cells of the present invention is obtained by introducing water and a fuel for fuel cells into a porous material (Invention 23). Such a solid fuel for fuel cells comprises a fuel for fuel cells introduced into a porous material, and is hence excellent in handleability. The component introduced into the porous material, moreover, is a two-component system of water and fuel for fuel cells. This results in a lower vapor pressure than is the case when the component introduced in the porous material is a one-component system comprising the fuel for fuel cells alone, and allows controlling vaporization of the fuel for fuel cells even under such temperature conditions where a fuel for fuel cells ordinarily vaporizes, thereby affording a solid fuel for fuel cells excellent in safety.

A solid fuel for fuel cells of the present invention is obtained by molding, to a predetermined shape, a fuel-carrying material in which a fuel for fuel cells is introduced into a porous material (Invention 24). Also, a solid fuel for fuel cells of the present invention is obtained by molding, to a predetermined shape, a fuel-carrying material in which water and a fuel for fuel cells are introduced into a porous material (Invention 25). By carrying out molding to a predetermined shape, the above inventions (Inventions 24 and 25) afford a solid fuel for fuel cells having yet superior handleability.

In the above inventions (Inventions 24 and 25), preferably, the fuel-carrying material is a powder, and the powdery fuel-carrying material is molded using a binder (Invention 26).

In the above inventions (Inventions 24 to 26), preferably, the fuel-carrying material is molded to a spherical shape (Invention 27). Through molding to a spherical shape, the above invention (Invention 27) allows forming a homogeneous coating film on the surface of the molded fuel-carrying material obtained by molding, and allows the thickness of the formed coating film to be calculated on the basis of a quantitative relationship between a coating agent and the molded fuel-carrying material, affording thus a solid fuel for fuel cells excellent in terms of quality control.

In a solid fuel for fuel cells of the present invention, a coating film is formed on the surface of a fuel-carrying material in which a fuel for fuel cells is introduced into a porous material (Invention 28). Also, in a solid fuel for fuel cells of the present invention, a coating film is formed on the surface of a fuel-carrying material in which water and fuel for fuel cells are introduced into a porous material (Invention 29).

By forming a coating film on the surface of the fuel-carrying material, the above inventions (Inventions 28 and 29) allow controlling the vaporization of the fuel for fuel cells introduced in the porous material, inside the coating film, even under temperature conditions at which the fuel for fuel cells vaporizes. A highly safe solid fuel for fuel cells can be produced as a result.

In the above inventions (Inventions 24 to 27), preferably, a coating film is formed on the surface of a molded fuel-carrying material obtained by molding_the fuel-carrying material (Invention 30). By forming a coating film on the surface of the molded fuel-carrying material, the above invention (Invention 30) allows controlling the vaporization of the fuel for fuel cells introduced in the porous material, inside the coating film, even under temperature conditions at which the fuel for fuel cells vaporizes. A highly safe solid fuel for fuel cells can be produced as a result.

In the above inventions (Inventions 28 to 30), preferably, the coating film comprises a cellulose derivative and/or polyvinyl alcohol (Invention 31). Cellulose derivatives and polyvinyl alcohol have excellent film formation effect, and hence allow easily forming a coating film on the surface of the fuel-carrying material or the molded fuel-carrying material. The above invention (Invention 31), therefore, allows further controlling the vaporization of the fuel for fuel cells introduced in the porous material, inside the coating film, even under temperature conditions at which the fuel for fuel cells vaporizes. A solid fuel for fuel cells having yet higher safety can be produced as a result.

A fuel cell of the present invention (Invention 32) comprises means for extracting a fuel for fuel cells from the solid fuel for fuel cells according to any of the above inventions (Inventions 22 to 31). In the above invention (Invention 32), preferably, the extracting means is means for bringing the solid fuel for fuel cells into contact with water (Invention 33).

### ADVANTAGEOUS EFFECT OF THE INVENTION

The present invention allows producing a solid fuel for fuel cells excellent in handleability and safety. The present invention allows also improving the safety of fuel for fuel cells by controlling the vaporization of the fuel for fuel cells.

### BRIEF DESCRIPTION OF THE DRAWINGS

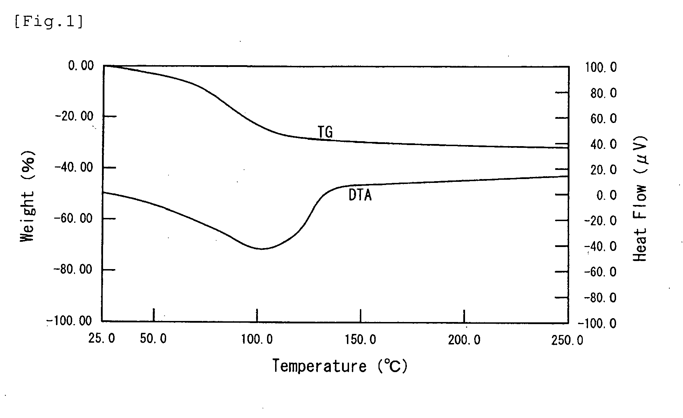

Fig. 1 is a graph illustrating experimental results of thermogravimetry (TG) and differential thermal analysis (DTA) performed on solid-state methanol obtained in Example 3.

### BEST MODE FOR CARRYING OUT THE INVENTION

A method for producing the solid fuel for fuel cells according to an embodiment of the present invention is explained next.
In the present embodiment, a solid fuel for fuel cells is produced by introducing a fuel for fuel cells into a porous material, molding a fuel-carrying material to a predetermined shape, and forming a coating film on the surface of the molded fuel-carrying material.

Examples of the fuel for fuel cells include, although not limited thereto, for instance alcohols, ethers, hydrocarbons, acetals, formic acid species or the like. As the fuel for fuel cells there can be used, specifically, lower aliphatic alcohols having 1 to 4 carbon atoms such as methanol, ethanol, denatured alcohol, 1-propanol, 2-propanol, 1-butanol, 2-butanol, tert-butanol and ethylene glycol; ethers such as dimethyl ether, methyl ethyl ether and diethyl ether; hydrocarbons such as propane and butane; acetals such as dimethoxymethane and trimethoxymethane; and formic acids such as formic acid and methyl formate. These may be used singly or in arbitrary combinations of two or more. Methanol, which is a fuel in direct methanol fuel cells, is preferably used among the foregoing.

The porous material can introduce the fuel for fuel cells by being brought into contact with the fuel for fuel cells. The solid fuel for fuel cells can be produced by molding, to a predetermined shape, a fuel-carrying material obtained by introducing the fuel for fuel cells into the porous material.

The porous material has a concaveconvex surface, and has pores such that the depth of surface depressions is larger than the pore diameter. The pore diameter of the porous material is not particularly limited, provided that the component of fuel for fuel cells can be introduced into the pores and can be held therein. The porous material may have pores classified into ultra-micropores having a pore diameter smaller than 0.5 nm, micropores having a pore diameter of 0.5 nm to less than 2 nm, mesopores having a pore diameter of 2 nm to less than 50 nm, or macropores having a pore diameter of 50 nm or larger. A porous material having pores of such pore diameters can effectively hold the fuel for fuel cells. The specific surface area of the porous material is preferably 100 to 1500 m²/g, while the bulk specific volume (tap) of the porous material is preferably 2.0 to 20 mL/g.

The porous material may be embodied, for instance, as a powder, particles, fibers, films, pellets or the like. The raw material from which the porous material is formed may be organic or inorganic, or a composite thereof.

Examples of the porous material include, for instance, silica gel, powder silica, zeolites, activated alumina, magnesium aluminometasilicate, activated carbon, molecular sieves, carbon, carbon fibers, activated clays, bone charcoal, porous glass; micropowders comprising inorganic oxides such as anodized aluminum oxide materials, titanium oxide and a calcium oxide; perovskite oxide materials such as calcium titanate and sodium niobate; clay materials such as sepiolite, kaolinite, montmorillonite and saponite; and synthetic adsorption resins such as ion-exchange resins. These porous materials may be used singly or in arbitrary combinations of two or more. The porous materials may also be used as hosts of a clathrate.

Among the foregoing, magnesium aluminometasilicate is preferably used as the porous material. The bulk specific volume of magnesium aluminometasilicate can be reduced depending on the producing method thereof. Accordingly, magnesium aluminometasilicate is suitably used in articles that must be compact, such as direct methanol fuel cells. Moreover, magnesium aluminometasilicate is a material also used as a raw material for digestive pharmaceutical preparations, and thus can be appropriately used by virtue of its proven safety for humans.

The fuel for fuel cells may be introduced into the porous material together with water. A solid fuel for fuel cells obtained by introducing water and a fuel for fuel cells into a porous material comprises a porous material having introduced therein a fuel for fuel cells as a two-component system of water and a fuel for fuel cells, which as a result has the effect of reducing the vapor pressure and raising the flash point and the ignition point of the solid fuel for fuel cells, vis-à-vis is the case when the fuel for fuel cells introduced in the porous material is a one-component system comprising the fuel for fuel cells alone. Therefore, vaporization of the fuel for fuel cells can be controlled even under such temperature conditions where a fuel for fuel cells ordinarily vaporizes, so that the solid fuel for fuel cells does not ignite even at the flash point of the fuel for fuel cells,- thereby affording a solid fuel for fuel cells excellent in safety.

The amount of water introduced together with the fuel for fuel cells into the porous material may be small. Specifically, water may be blended in 0.01 to 1 parts by weight relative to 1 part by weight of fuel for fuel cells. Upon introducing a fuel for fuel cells together with water into a porous material, water may be introduced into the porous material having the fuel for fuel cells already introduced therein, or, alternatively, an aqueous solution of the fuel for fuel cells may be introduced into the porous material.

The method for introducing the fuel for fuel cells into the porous material is not particularly limited. A fuel-carrying material in which a fuel for fuel cells is introduced into a porous material can be produced, for instance, by adding the porous material to the fuel for fuel cells, under sufficient stirring. In this case, the blending amount of porous material ranges preferably from 0.2 to 1 parts by weight relative to 1 part by weight of fuel for fuel cells. A porous material blending amount lying within the above amount range allows the fuel for fuel cells to be introduced effectively into the porous material, and allows molding effectively the fuel-carrying material obtained by introducing the fuel for fuel cells into the porous material.

The temperature and pressure conditions during introduction of the fuel for fuel cells into the porous material are not particularly limited, and the fuel for fuel cells may be introduced into the porous material at normal temperature and pressure. A fuel-carrying material in which a fuel for fuel cells is introduced into a porous material can be produced by mixing the fuel for fuel cells and the porous material at normal temperature and pressure, with sufficient stirring. When using a gaseous fuel as the fuel for fuel cells, the fuel for fuel cells is preferably introduced under pressure into the porous material.

The obtained fuel-carrying material is molded to a predetermined shape. A molded fuel-carrying material can be obtained as a result. Such a shape may be a suitable shape for the fuel cell in which the fuel for fuel cells is to be used, and may be, for instance, a defined-shape solid of spherical shape, quadrangular shape, cylindrical shape or the like, or of thin-film shape or fiber-like shape. A spherical shape is preferred among the foregoing. When the molded fuel-carrying material is molded to a spherical shape, a coating film of homogeneous thickness can be formed on the surface of the molded fuel-carrying material obtained by molding the fuel-carrying material in the below-described step of forming a coating film. Accordingly, film thickness can be calculated easily on the basis of the quantitative relationship between the molded fuel-carrying material and the coating agent used for forming the coating film. Calculating film thickness that way is advantageous from the viewpoint of quality control of the finished article.

For molding a fuel-carrying material, the form of the fuel-carrying material is preferably a powder. A fuel-carrying material in the form of a powder can be easily molded to a predetermined shape (for instance granules, fibers, films, pellets or the like), and is thus preferable in terms of versatility.

The method for molding the obtained fuel-carrying material is not particularly limited, and may involve, for instance, molding the fuel-carrying material to a spherical shape using a binder or the like.

Examples of the binder include, for instance, starch, cornstarch, molasses, lactose, cellulose, cellulose derivative, gelatin, dextrin, gum arabic, alginic acid, polyacrylic acid, glycerin, polyethylene glycol, polyvinyl alcohol (PVA), polyvinyl pyrrolidone (PVP), water, methanol, ethanol or the like. The foregoing may be used singly or in arbitrary combinations of two or more.

Since methanol is the fuel for fuel cells used in direct methanol fuel cells, the binder used is preferably methanol. With methanol there is also preferably used a material having the property of increasing viscosity when coming into contact with methanol, so that such thickening effect contributes to inter-particle binding. Such being the case, the binder used is preferably methanol and, for instance, a cellulose derivative, PVP or the like. The step of introducing methanol, as the fuel for fuel cells, into the porous material, may be omitted when using methanol as the binder. In this case, molding is carried out with methanol being added, as a binder, to the porous material, so that a molded fuel-carrying material can be obtained while methanol, as the fuel for fuel cells, is being introduced into the porous material.

When using concomitantly methanol and a cellulose derivative or PVP as the binder, the blending ratio (weight basis) of methanol to the cellulose derivative or PVP is preferably 1000:1 to 10:1. A blending ratio within such a range allows molding the fuel-carrying material effectively.

Methods for obtaining the molded fuel-carrying material using the binder include, for instance, granulation molding, in which a viscous fluid obtained by bringing into contact methanol and a cellulose derivative or the like is added to the fuel-carrying material or the porous material, or a method in which the cellulose derivative or the like, in unmodified powder form, is mixed with the fuel-carrying material or the porous material, followed by granulation molding while adding methanol.

Specifically, the method for obtaining the molded fuel-carrying material may be rolling granulation using a drum granulator, disc granulator or the like; mixing-stirring granulation using a Flexomix, a vertical granulator or the like; extrusion granulation using a screw-type extrusion granulator, a roller-type extrusion granulator, a blade-type extrusion granulator, a self molding-type extrusion granulator or the like; compression granulation using a tableting granulator, a briquette type granulator or the like; and fluidized bed granulation, in which a binder is sprayed onto the fuel-carrying material while the fuel-carrying material is held in floating suspension within a fluid (mainly air) blown upwards, to granulate thereby the fuel-carrying material. Given that an alcohol (methanol) is used as the binder, and that molding results in spherical shapes, the molded fuel-carrying material is preferably molded by rolling granulation or mixing-stirring granulation.

The blending amount of binder is not particularly limited, but ranges preferably from 0.001 to 5 parts by weight relative to 1 part by weight of fuel-carrying material or porous material. The fuel-carrying material can be molded effectively when the blending amount of the binder lies within such a range.

Lastly, a coating film is formed on the surface of the molded fuel-carrying material obtained by molding the fuel-carrying material. A solid fuel for fuel cells can be produced thereby that allows controlling vaporization of the fuel for fuel cells held in the porous material, enclosed now within the formed coating film. Methods for forming a coating film on the surface of the molded fuel-carrying material include, for instance, bringing a coating agent into contact with the molded fuel-carrying material.

A polymer material having film-formation effect is preferably used as the coating agent, for instance a cellulose derivative such as methylcellulose, ethylcellulose, hydroxyethylcellulose, hydroxypropylcellulose, hydroxypropylmethylcellulose, hydroxyethylmethylcellulose, carboxymethylcellulose, hydroxypropylmethylcellulose acetate succinate or the like; a water-soluble polymer such as polyvinyl alcohol (PVA) or the like; or a polymer soluble both in water and alcohols, such as polyvinyl pyrrolidone (PVP) or the like. The foregoing may be used singly or in arbitrary combinations of two or more.

A cellulose derivative and/or PVA are preferably used among such coating agents, more preferably in particular, a cellulose derivative. Many cellulose derivatives are used, for instance, as binding materials for tablets and granules, matrix bases for sustained-release tablets, gelling agents or the like, in the medical field, and are also used in the food industry as thickeners/gelling agents, film coating agents for health foods, capsule agents, shape-loss preventing agents in fry, pancakes or the like. Cellulose derivatives boast thus proven safety for humans, and are hence appropriate in terms of safety, also in case of accidental ingestion by infants.

Methods for forming a coating film on the surface of the molded fuel-carrying material by bringing into contact the molded fuel-carrying material and a coating agent include, but not limited thereto, for instance fluidized bed coating, coating by combined rolling and fluidizing, drum coating, pan coating or the like. Coating may involve film coating, sugar coating or the like, but preferably film coating, from the viewpoint of making the formed coating film as thin as possible, thereby increasing the methanol content in the solid fuel for fuel cells.

The blending amount of the coating agent ranges preferably from 0.0001 to 0.1 parts by weight relative to 1 part by weight of molded fuel-carrying material. When the blending amount of coating agent falls within the above range the coating film can be effectively formed, to a desired thickness, on the surface of the molded fuel-carrying material.

Preferably, the solid fuel for fuel cells thus obtained has introduced therein 1 to 3 parts by weight of fuel for fuel cells relative to 1 part by weight of porous material. When obtained by introducing water and fuel for fuel cells into a porous material, the solid fuel for fuel cells has preferably introduced therein a total 1 to 3 parts by weight of fuel for fuel cells and water relative to 1 part by weight of porous material.

Methods for extracting the fuel for fuel cells from the solid fuel for fuel cells produced in accordance with the present embodiment include, for instance, a method that involves vaporizing the fuel for fuel cells out of the solid fuel for fuel cells by heating the solid fuel for fuel cells, to extract thereby the fuel for fuel cells in gaseous form, or a method that involves extracting the fuel for fuel cells, in the form of an aqueous solution, out of the solid fuel for fuel cells, by bringing the solid fuel for fuel cells into contact with water.

Given that the solid fuel for fuel cells is used in direct methanol fuel cells, the fuel for fuel cells is preferably extracted from the solid fuel for fuel cells by bringing the solid fuel for fuel cells into contact with water. Doing so allows extracting the fuel for fuel cells in the form of a fuel aqueous solution, whereby the fuel aqueous solution can be fed directly to the negative electrode (fuel electrode) of the fuel cell, which exhibits as a result excellent energy characteristics.

The fuel cell in which the solid fuel for fuel cells is used is not particularly limited, and may be, for instance, a direct methanol fuel cell, a polymer electrolyte fuel cell, a solid oxide fuel cell or the like.

The fuel cell comprises means for extracting the fuel for fuel cells from the solid fuel for fuel cells. Such means allows extracting fuel for fuel cells from the solid fuel for fuel cells, and may be, for instance, means for vaporizing the fuel for fuel cells out of the solid fuel for fuel cells by heating the solid fuel for fuel cells, or means for bringing the solid fuel for fuel cells into contact with water, filtering the porous material, and extracting the fuel for fuel cells in the form of an aqueous solution.

The solid fuel for fuel cells obtained in accordance with the present embodiment has excellent safety in that, if damaged as a result of an unexpected situation, the solid fuel for fuel cells does not diffuse as a liquid fuel would, nor does it irritate the skin should it come into contact with hands or feet.

In a solid fuel for fuel cells obtained by introducing water and a fuel for fuel cells into a porous material, and having formed a coating film on the surface, moreover, the flash point and the ignition point of the solid fuel for fuel cells is higher than the flash point and the ignition point of the fuel for fuel cells. This allows controlling the vaporization of the fuel for fuel cells. Safety and stability during storage of the fuel for fuel cells can be improved as a result, while handling of the fuel for fuel cells can also be made easier thereby.

The above embodiment has been described for facilitating understanding of the present invention, and not for limiting the present invention. The various elements described in the above embodiment are thus deemed to also include all design modifications and equivalents falling under the technical scope of the present invention.

For instance, the step of molding to a predetermined shape the fuel-carrying material comprising a porous material having a fuel for fuel cells introduced therein may be omitted. Likewise, the step of forming a coating film on the surface of the molded fuel-carrying material obtained by molding the fuel-carrying material may also be omitted.

### EXAMPLES

The present invention is explained in detail next based on examples, although the present invention is in no way meant to be limited to or by these examples.

### [Example 1]

Methanol in an amount of 2 g was added to 1 g of a solid powder of magnesium aluminometasilicate, with thorough stirring. As a result there was obtained a solid-state methanol (Sample 1) having a methanol content of 66.7wt%.

To 1 g of the obtained solid-state methanol (Sample 1) there were added 5 g of deionized water, and then the resulting mixture was left to stand for a given time at room temperature. Thereafter the liquid mixture was filtered, and the methanol concentration (wt%) in the obtained filtrate was measured in a gas chromatograph (GC-9A, Shimadzu Corp.) under the below-described conditions. The methanol release rate (%) was also calculated. The results are given in Table 1.

**[Table 1]**

| Standing time (min) | Methanol concentration (wt%) | Methanol release rate (%) |
|---|---|---|
| 1 | 10.3 | 87.5 |
| 5 | 11.2 | 95.2 |
| 10 | 11.3 | 96.0 |
| 30 | 11.5 | 97.7 |
| 60 | 11.3 | 96.0 |

As table 1 shows, methanol could be extracted from of the solid-state methanol, in the form of a methanol aqueous solution, with no less than 95wt% of the methanol held in the solid-state methanol (Sample 1) was released into the deionized water within 5 minutes after being left to stand. The methanol aqueous solution thus obtained was diluted with deionized water into a 3wt% methanol aqueous solution that was then fed to the negative electrode (fuel electrode) of a direct methanol fuel cell using a Nafion electrolyte. The fuel cell proved to be operative.

### [Example 2]

Methanol in an amount of 2 g and water in an amount of 1 g were added to 1 g of a solid powder of magnesium aluminometasilicate, with thorough stirring. As a result there was obtained a solid-state methanol (Sample 2) having a methanol content of 50wt%.

The flash point of Sample 1 obtained in Example 1 and Sample 2 obtained in Example 2 was measured in accordance with the "Setaflash closed-cup flash point test method", which is an assessment test method for hazardous materials prescribed in the "Government Ordinances on Testing and Characterization of Hazardous Materials". Since the fuel for fuel cells is vaporized at the flash point, measuring the flash point allows verifying whether vaporization of the fuel for fuel cells can be controlled or not.

The flash point of Sample 1 was 11°C, while the flash point of Sample 2 was 28°C. This showed that the flash point of the solid fuel for fuel cells (solid-state methanol) obtained by introducing water and methanol into magnesium aluminometasilicate could be raised beyond the flash point of the fuel for fuel cells (methanol).

### [Comparative example 1]

The flash point of undiluted methanol was measured in accordance with the "tag closed-cup flash point test method (JIS-K2265-1996, Test Methods for the Flash Point of Crude Oil and Petroleum Products)", which is a method for measuring the flash point of liquids. The flash point of the undiluted methanol was 11°C.

This showed that the flash point of the solid-state methanol (solid fuel for fuel cells), obtained by introducing undiluted methanol (fuel for fuel cells) into magnesium aluminometasilicate (porous material) in accordance with the method of Example 2, was higher than the flash point of undiluted methanol by 10°C or more, and thus the solid fuel for fuel cells obtained in accordance with the method of Example 2 succeeded in enhancing the safety of the fuel for fuel cells.

### [Example 3]

To 1000 g of magnesium aluminometasilicate there were added, as a binder, 2000 g of methanol and 20 g of hydroxypropylcellulose, to prepare a spherical granulate using a mixing-stirring granulator (VG-25, by Powrex Co.). The obtained fuel-carrying material, in an amount of 1000 g, was fed into a fluidized bed coating machine (MP-1, by Powrex Co.), and a coating solution (a solution of 5 g of ethylcellulose in 995 g of methanol) was sprayed onto the surface of the fuel-carrying material, followed by formation of a thin film through drying, to a yield solid-state methanol (Sample 3).

The obtained solid-state methanol (Sample 3) was set in a high-sensitivity differential scanning calorimeter (Thermo Plus 2, by Rigaku Co.), and was subjected to a differential thermal analysis (DTA) to measure the thermogravimetric (TG) change that accompanies the vaporization of methanol, for a rise in temperature from 25 to 200°C with a temperature rise rate of 10°C/min, and to observe the process of thermal change of the solid-state methanol (Sample 3). The results are illustrated in Fig. 1.

As illustrated in Fig. 1, the weight of the solid-state methanol (Sample 3) decreased with rising temperature, and became substantially constant at about 140°C, while the thermogravimetric change was of -30.63% at 200°C, where no further thermogravimetric change was observed. This suggests that the methanol content in the solid-state methanol (Sample 3) obtained in Example 3 is 30.63wt%. An endothermic peak was observed at 102.8°C, at which the endothermic reaction of the solid-state methanol (Sample 3) takes place on account of methanol vaporization as the temperature rises.

The flash point of the solid-state methanol (Sample 3) obtained in Example 3 was measured in accordance with the "Setaflash closed-cup flash point test method", which is an assessment test method for hazardous materials prescribed in the "Government Ordinances on Testing and Characterization of Hazardous Materials". Since the fuel for fuel cells is vaporized at the flash point, measuring the flash point of the sample allows verifying whether vaporization of the fuel for fuel cells can be controlled or not.

The flash points of the solid-state methanol (Sample 3) obtained in Example 3 was 83°C, which is substantially higher than the flash point of 40°C that corresponds to flammable solids in Class 2 of hazardous materials. The solid-state methanol (Sample 3) obtained in the present example was thus found to be a non-hazardous material. These results showed that vaporization of methanol, as the fuel for fuel cells, can be controlled.

Moreover, the flash point of the solid-state methanol (Sample 3) obtained by introducing undiluted methanol into magnesium aluminometasilicate, in accordance with the method of Example 3, followed by molding, was higher by 70°C or more than the flash point of undiluted methanol. This showed that a solid fuel for fuel cells obtained in accordance with the method of Example 3 has further enhanced safety.

### INDUSTRIAL APPLICABILITY

The method for producing a solid fuel for fuel cells of the present invention is useful for producing a highly safe and solid fuel for fuel cells that is easy to handle.

## Claims

1. A method for producing a solid fuel for fuel cells, comprising the step of introducing a fuel for fuel cells into a porous material.

2. A method for producing a solid fuel for fuel cells, comprising the step of introducing water and a fuel for fuel cells into a porous material.

3. A method for producing a solid fuel for fuel cells, comprising the steps of introducing a fuel for fuel cells into a porous material, and molding an obtained fuel-carrying material to a predetermined shape.

4. A method for producing a solid fuel for fuel cells, comprising the steps of introducing water and a fuel for fuel cells into a porous material, and molding an obtained fuel-carrying material to a predetermined shape.

5. The method for producing a solid fuel for fuel cells according to claim 3 or 4, wherein said fuel-carrying material is a powder, and said powdery fuel-carrying material is molded using a binder.

6. The method for producing a solid fuel for fuel cells according to any one of claims 3 to 5, wherein said fuel-carrying material is molded to a spherical shape.

7. A method for producing a solid fuel for fuel cells, comprising the steps of introducing a fuel for fuel cells into a porous material, and forming a coating film on the surface of an obtained fuel-carrying material.

8. A method for producing a solid fuel for fuel cells, comprising the steps of introducing water and a fuel for fuel cells into a porous material, and forming a coating film on the surface of an obtained fuel-carrying material.

9. The method for producing a solid fuel for fuel cells according to any one of claims 3 to 6, comprising the step of forming a coating film on the surface of a molded fuel-carrying material obtained by molding said fuel-carrying material.

10. The method for producing a solid fuel for fuel cells according to any one of claims 7 to 9, wherein said coating film is formed by a cellulose derivative and/or polyvinyl alcohol.

11. The method for producing a solid fuel for fuel cells according to any one of claims 1 to 10, wherein said fuel for fuel cells is an alcohol.

12. The method for producing a solid fuel for fuel cells according to claim 11, wherein said alcohol is methanol.

13. The method for producing a solid fuel for fuel cells according to any one of claims 1 to 12, wherein said porous material is magnesium aluminometasilicate.

14. A method for controlling vaporization of a fuel for fuel cells, comprising the step of introducing water and a fuel for fuel cells into a porous material.

15. A method for controlling vaporization of a fuel for fuel cells, comprising the steps of introducing a fuel for fuel cells into a porous material, and forming a coating film on the surface of an obtained fuel-carrying material.

16. A method for controlling vaporization of a fuel for fuel cells, comprising the steps of introducing water and a fuel for fuel cells into a porous material, and forming a coating film on the surface of an obtained fuel-carrying material.

17. A method for controlling vaporization of a fuel for fuel cells, comprising the steps of introducing a fuel for fuel cells into a porous material, molding an obtained fuel-carrying material to a predetermined shape, and forming a coating film on the surface of an obtained molded fuel-carrying material.

18. A method for controlling vaporization of a fuel for fuel cells, comprising the steps of introducing water and a fuel for fuel cells into a porous material, molding an obtained fuel-carrying material to a predetermined shape, and forming a coating film on the surface of an obtained molded fuel-carrying material.

19. The method for controlling vaporization of a fuel for fuel cells according to claim 17 or 18, wherein said fuel-carrying material is a powder, and said powdery fuel-carrying material is molded using a binder.

20. The method for controlling vaporization of a fuel for fuel cells according to any one of claims 17 to 19, wherein said fuel-carrying material is molded to a spherical shape.

21. The method for controlling vaporization of a fuel for fuel cells according to any one of claims 15 to 20, wherein said coating film is formed by a cellulose derivative and/or polyvinyl alcohol.

22. A solid fuel for fuel cells, wherein the solid fuel for fuel cells is obtained by introducing a fuel for fuel cells into a porous material.

23. A solid fuel for fuel cells, wherein the solid fuel for fuel cells is obtained by introducing water and a fuel for fuel cells into a porous material.

24. A solid fuel for fuel cells, wherein the solid fuel for fuel cells is obtained by molding, to a predetermined shape, a fuel-carrying material in which a fuel for fuel cells is introduced into a porous material.

25. A solid fuel for fuel cells, wherein the solid fuel for fuel cells is obtained by molding, to a predetermined shape, a fuel-carrying material in which water and a fuel for fuel cells are introduced into a porous material.

26. The solid fuel for fuel cells according to claim 24 or 25, wherein said fuel-carrying material is a powder,
and said powdery fuel-carrying material is molded using a binder.

27. The solid fuel for fuel cells according to any one of claims 24 to 26, wherein said fuel-carrying material is molded to a spherical shape.

28. A solid fuel for fuel cells, wherein a coating film is formed on the surface of a fuel-carrying material in which a fuel for fuel cells is introduced into a porous material.

29. A solid fuel for fuel cells, wherein a coating film is formed on the surface of a fuel-carrying material in which water and a fuel for fuel cells are introduced into a porous material.

30. The solid fuel for fuel cells according to any one of claims 24 to 27, wherein a coating film is formed on the surface of a molded fuel-carrying material obtained by molding said fuel-carrying material.

31. The solid fuel for fuel cells according to any one of claims 28 to 30, wherein said coating film comprises a cellulose derivative and/or polyvinyl alcohol.

32. A fuel cell, comprising means for extracting a fuel for fuel cells from the solid fuel for fuel cells according to any one of claims 22 to 31.

33. The fuel cell according to claim 32, wherein said extracting means is means for bringing said solid fuel for fuel cells into contact with water.
